# FASCICULE DE BREVET EUROPEEN

(11) **EP 4 331 984 B1**
(45) Date de publication et mention de la délivrance du brevet: **30.07.2025**
(21) Numéro de dépôt: 23192066.1
(22) Date de dépôt: 18.08.2023
(51) Int. Cl.: B64D 1/16, A62C 3/02

(54) **DISPOSITIF DE LARGAGE DE FLUIDE DANS UNE DIRECTION DÉTERMINÉE POUR AÉRONEF HÔTE DE LUTTE CONTRE LE FEU ET AÉRONEF ÉQUIPÉ D'UN TEL DISPOSITIF**
VORRICHTUNG ZUM AUSLÖSEN VON FLÜSSIGKEIT IN EINER BESTIMMTEN RICHTUNG FÜR EIN FLUGZEUG ZUR BRANDBEKÄMPFUNG UND FLUGZEUG MIT EINER SOLCHEN VORRICHTUNG
DEVICE FOR RELEASING FLUID IN A DETERMINED DIRECTION FOR HOST FIREFIGHTING AIRCRAFT AND AIRCRAFT EQUIPPED WITH SUCH A DEVICE

(30) Priorité: 30.08.2022 FR 2208682
(43) Date de publication de la demande: 06.03.2024
(73) Titulaire: Airbus (S.A.S.), 31700 Blagnac (FR)
(72) Inventeur: BURGUNDER, Samuel, TOULOUSE (FR); THIERS, Jean-Loup, TOULOUSE (FR)
(74) Mandataire: Airbus-OPS SAS

(56) Documents cités:
- EP-A1- 1 053 935
- WO-A2-2004/108528
- US-A- 3 698 480
- US-A- 3 901 467
- US-A1- 2006 260 826

## Description

La présente invention concerne un système de stockage et de largage de fluide et plus particulièrement d'eau ou de produits tels qu'un retardant intégré à un aéronef hôte permettant de le convertir en aéronef bombardier d'eau utilisé pour la lutte contre les incendies notamment de forêts. L'invention s'applique à tous les types d'aéronefs susceptibles de recevoir un tel système et notamment aux aéronefs civils et militaires.

Pour permettre de lutter plus efficacement contre les incendies de forêt, un renfort en aéronef bombardier d'eau serait utile. Il est donc envisagé de convertir temporairement des aéronefs non utilisés au moment de l'incendie ou dont l'utilisation peut être temporisée ou annulée, en avion bombardier d'eau. De tels aéronefs sont appelés aéronefs hôtes. Dès la fin de l'incendie, l'aéronef peut être réaffecté à sa mission première. Ainsi, par exemple, des avions militaires comme l'A400M (marque déposée) sont particulièrement appropriés en temps de paix. Ce type d'avion de type cargo présente un volume intérieur susceptible d'embarquer un chargement comprenant un réservoir d'eau et un dispositif permettant de larguer l'eau à l'extérieur de l'avion dans une direction longitudinale à l'aéronef provoquant une grande dispersion de l'eau projetée. Lorsque le feu est éteint, il suffit de décharger l'aéronef pour l'utiliser à nouveau comme avion militaire.

La présente invention vise à proposer une amélioration des systèmes de stockage et de largage d'eau pour limiter la dispersion d'eau dans l'air.

A cet effet, la présente invention concerne un système de stockage et de largage de fluide selon la revendication 1.

De cette manière, le fluide s'écoule vers le sol et n'est plus dispersée comme dans l'art antérieur.

WO2004/108528 A2 et EP 1 053 935 A1 décrivent des systèmes de largage aérien capables d'éjecter un liquide à partir d'un aéronef.

D'autres buts, caractéristiques et avantages ressortiront de la description de l'invention qui va suivre, description donnée à titre d'exemple uniquement non limitatif, en référence aux dessins ci-annexés dans lesquels :
[Fig. 1] est une vue latérale d'un aéronef hôte selon la présente invention ;
[Fig. 2] est une vue en perspective d'un système de stockage et de largage de fluide selon la présente invention ;
[Fig. 3] est une vue latérale d'un aéronef hôte équipé d'un système de stockage et de largage de fluide selon la présente invention dans lequel l'intérieur de l'aéronef est découvert de manière schématisée en plan ;
[Fig. 4] est une vue en perspective de la zone arrière d'un aéronef hôte en opération équipé d'un système de stockage et de largage de fluide selon la présente invention ;

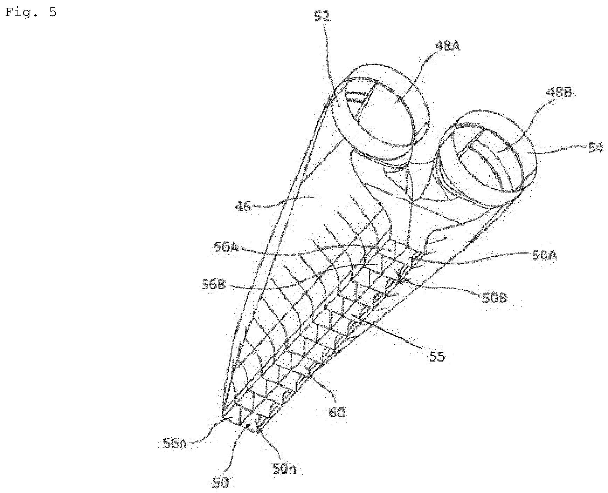

[Fig. 5] est une vue en perspective d'un certain angle de vue de dessous d'un dispositif de largage de fluide selon la présente invention ;
[Fig. 6] est une vue en perspective d'un certain angle de vue de dessus d'un dispositif de largage de fluide selon la présente invention ;
[Fig. 7] une vue en perspective d'un certain angle de vue latéral de la zone avant d'un aéronef équipé d'un système de stockage et de largage de fluide selon la présente invention dont l'intérieur est découvert pour mettre en évidence de manière schématisée un dispositif de contrôle dudit système ;
[Fig. 8] une vue en perspective du dispositif de contrôle proprement dit selon la présente invention ;
[Fig. 9] une vue en en plan du panneau de contrôle du dispositif de contrôle selon la présente invention ;
[Fig. 10] une vue partielle schématique de côté de l'arrière de l'aéronef selon une première position du système lorsque le dispositif de largage est déployé ;
[Fig. 11] une vue partielle schématique de côté de l'arrière de l'aéronef selon une deuxième position du système lorsque le dispositif de largage est rétracté.

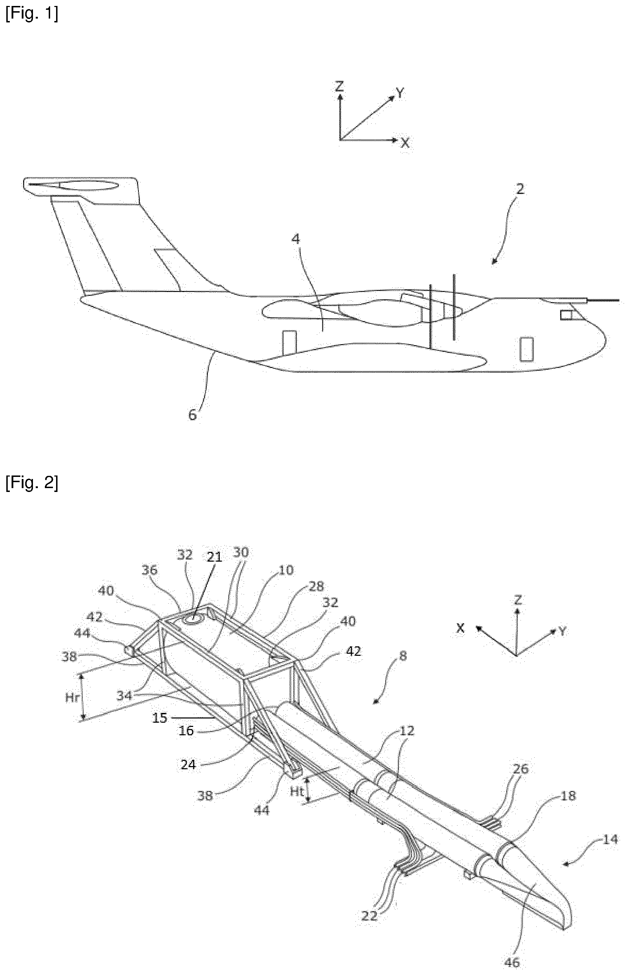

La description qui suit se réfère à un repère orthonormé X, Y, Z (visible sur les figures 1 et 2) dans lequel les directions horizontales X,Y et verticale Z sont définies en référence à un aéronef posé sur un sol horizontal. Les trois directions X, Y, Z sont orthogonales entre elles. Le fuselage de l'aéronef s'étend le long d'une direction longitudinale X. La direction Y correspond à la direction orientée transversalement et horizontalement par rapport à la direction longitudinale X. La direction Z correspond à la direction verticale ou hauteur. Qualifier de longitudinal respectivement transversal, vertical signifie parallèle à la direction longitudinale, respectivement transversale, verticale.

La figure 1 représente un aéronef 2 militaire de type A400M (marque déposée) destiné à être converti temporairement en aéronef bombardier d'eau. L'aéronef 2 comprend une zone 4 offrant un espace libre intérieur utile. Il dispose également d'une porte 6 arrière susceptible de s'ouvrir en vol. La figure 1 représente la porte 6 en position fermée. L'A400M est pris à titre illustratif mais d'autres aéronefs présentant des caractéristiques similaires à savoir une zone 4 présentant un volume intérieur suffisant pour recevoir un système 8 modulaire comme décrit ci-après et une porte 6 arrière permettant la communication de la zone 4 avec l'extérieur de l'aéronef pourrait convenir comme aéronef hôte.

Selon la présente invention, le système 8 modulaire de stockage et de largage de fluide comprend un réservoir 10 de fluide disposé longitudinalement et dans l'exemple illustré d'eau, de retardant ou tout autre fluide utilisé pour la lutte contre le feu et au moins un tube 12 s'étendant longitudinalement depuis le réservoir auquel il est connecté. Disposer ou s'étendre longitudinalement signifie que la direction de la plus grande dimension est parallèle à la direction longitudinale à savoir la direction X. Le fluide utilisé est en général de l'eau mais d'autres types de fluide tels qu'un retardant pourraient être utilisés suivant le feu à éteindre voire de l'eau combiné à tout type de produits. La hauteur Hr du réservoir, à savoir la dimension du réservoir la plus grande prise dans la direction Z verticale, est supérieure à celle Ht (dimension la plus grande prise dans la direction Z verticale) du ou des tubes 12. La hauteur Ht correspond au diamètre de tubes cylindriques de section circulaire comme ceux représentés sur les figures. Selon la forme de réalisation illustrée, la hauteur Hr est au moins deux fois supérieure à la hauteur Ht. Par ailleurs, la largeur Lr du réservoir, à savoir la dimension la plus grande prise dans la direction transversale Y, est supérieure à la largeur la plus grande du tube 12 ou dans le cas de plusieurs tubes, à la somme des largeurs les plus grandes des tubes 12 : la largeur d'un tube correspond à son diamètre pour des tubes cylindriques de section circulaire comme ceux représentés sur les figures. Du fait d'avoir une section transversale de tube de dimension bien plus faible que la section transversale du réservoir, la vitesse du fluide s'écoulant dans le ou les tubes 12 depuis le réservoir est d'autant plus importante. Ces rapports de dimension déterminent la vitesse d'écoulement et sont donc choisis pour avoir une vitesse d'écoulement suffisante pour un largage d'eau hors de l'aéronef efficace. Toutes autres proportions dans les dimensions est possible. Dans le cas de plusieurs tubes 12, ceux-ci peuvent être disposés parallèlement les uns aux autres. Dans le cas de tubes cylindriques de section circulaire, l'ensemble des axes des tubes sont compris dans un même plan. Dans la forme de réalisation illustrée, deux tubes 12 sont prévus mais comme vu précédemment tout autre nombre de tubes est envisageable. Les deux tubes sont de forme cylindrique de section circulaire. Ils sont parallèles et leurs axes sont compris dans un même plan parallèle au plan XY. Les tubes s'étendent dans la direction longitudinale du réservoir à savoir dans la direction de sa longueur pour un réservoir parallélépipédique de base rectangulaire et section carré, le réservoir s'étendant lui-même dans une direction longitudinale. Toute autre forme de réalisation est possible à savoir des tubes de dimensions différentes, positionnés dans des plans différents ... Le ou les tubes s'étendent de manière qu'une fois le système 8 installé dans l'aéronef, le ou les tubes 12 conduisent le fluide jusqu'à l'extrémité 20 longitudinalement de la porte arrière 6 de l'aéronef en position ouverte.

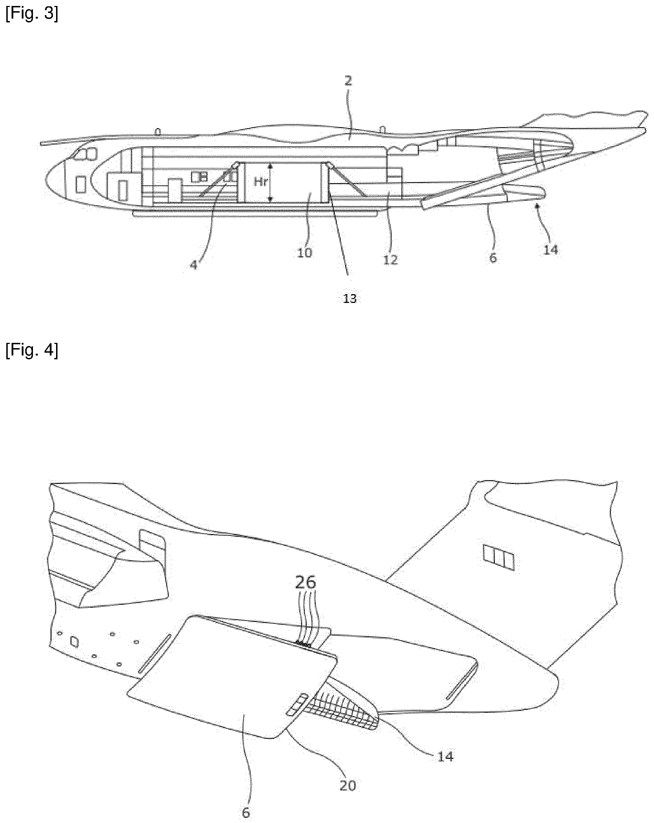

Les tubes 12 s'étendent depuis le réservoir jusqu'à un dispositif 14 de largage d'eau : leur longueur est choisie pour que l'une des extrémités 16 des tubes soit connectée avec le réservoir 10 et l'autre extrémité 18 avec le dispositif 14. Dans la forme de réalisation, l'extrémité 18 des tubes, une fois le système 8 en position de largage, se trouve au droit de l'extrémité 20 (représentée sur la figure 4) libre de la porte 6 arrière. De cette manière, le dispositif 14 de largage est entièrement à l'extérieur de l'aéronef en porte à faux. La longueur des tubes 12 permet également de positionner le réservoir 10 à une distance acceptable du centre de gravité de l'aéronef pour ne pas gêner son équilibre lorsqu'il est rempli et pendant le largage. La distance acceptable est de manière connue déterminée par un diagramme de masse et de centrage propre à chaque aéronef. Selon une forme de réalisation, le centre de gravité du réservoir seul rempli d'eau se trouve à une distance acceptable du centre de gravité de l'aéronef. Chaque tube 12 est pourvu d'une vanne 13 au niveau de sa connexion avec le réservoir. Chaque vanne 13 est de type connue par exemple de type papillon ou à obturateur conique et ne sera pas plus décrit : elle permet d'ouvrir et fermer la communication entre le réservoir et chaque tube. Comme il sera vu plus loin, une ou plusieurs vannes peuvent être positionnées également au niveau du dispositif 14 de largage pour adapter le débit d'eau. Suivant la forme de réalisation, le système 8 comprend des vannes 13 au niveau liaison réservoir-tube et/ou liaison dispositif 14-air extérieur à l'aéronef. De munir les tubes de vannes 13 au niveau de leur connexion avec le réservoir permet à l'aéronef de voler avec le réservoir 10 rempli de fluide et les tubes 12 vides. Ainsi en positionnant le réservoir à une distance acceptable du centre de gravité de l'aéronef, l'équilibre de l'aéronef est maintenu. Cependant, il est possible de placer le réservoir dans une position plus lointaine du centre de gravité par exemple pour éviter la zone de projection des pales moteur. Dans ce cas, le fait de munir le dispositif de largage de vannes 13 permet de remplir les tubes (remplis en vol) et de déplacer le centre de gravité du système complet (par rapport à celui d'un système avec les tubes vides) afin qu'il soit à une distance acceptable de celui de l'aéronef.

Au moins deux tuyaux 22 s'étendent dans la direction longitudinale X entre le réservoir 10 et la porte 6 arrière le long du ou desdits tubes 12. Dans le cas de tuyaux 22 et tubes 12 cylindriques de section circulaire, les tuyaux 22 sont de diamètre inférieur à celui des tubes 12. L'une des extrémités 24 des tuyaux est connectée au réservoir 10 et l'autre extrémité 26 se trouve au niveau de la porte 6 arrière. Les tuyaux 22 au niveau de l'extrémité 26 suivent une direction différente de la direction longitudinale et dans la forme illustrée une direction transversale. En effet, les tuyaux 22 présentent une forme permettant à leur extrémité 26 de venir à hauteur transversalement du bord latéral de la porte arrière ou en retrait par rapport à celui-ci vers l'intérieur de la porte de manière à pouvoir fermer la porte 6 au décollage, à l'atterrissage et dans certaines phases de vol. Les tuyaux 22 permettent d'alimenter le réservoir 10 depuis le sol. Chaque extrémité 26 est connectée à un ou plusieurs engins au sol par exemple des camions de pompier ce qui permet de remplir le réservoir en eau depuis le sol. Selon une forme de réalisation possible, l'extrémité 26 est conçue de manière à recevoir les raccords types de tuyaux souples des camions de pompier. La pluralité de tuyaux permet d'adapter le temps de remplissage. Le fait d'être accessible des deux côtés de l'aéronef permet à un engin au sol de stationner d'un côté ou de l'autre de l'aéronef sachant qu'il est aussi possible d'avoir un engin de chaque côté pour accélérer le remplissage. Dans la forme de réalisation illustrée, trois tuyaux 22 sont prévus le long de chacun des deux tubes 12, à savoir en tout six tuyaux. Les deux tubes 12 dits extrémaux dans le cas de plus de deux tubes correspondent aux tubes se trouvant au plus près transversalement des parois de l'aéronef. Les tuyaux 22 sont disposés au niveau latéral de chacun des tubes 12 extrémaux du côté opposé au tube adjacent. Les tuyaux 22 sont disposés l'un au-dessus de l'autre selon l'axe vertical Z. Les tuyaux 22 s'éloignent peu à peu transversalement des tubes 12. Dans la forme de réalisation illustrée, les tuyaux s'éloignent jusqu'à se trouver dans une direction transversale Y au niveau du bord de la porte arrière transversalement. Dans la forme de réalisation illustrée sur la figure 4, l'extrémité des tuyaux 22 se trouve dans la deuxième moitié longitudinalement de la porte 6 arrière la plus proche de l'extrémité 20.

Le système 8 est pourvu d'un moyen permettant de prévenir les personnes remplissant le réservoir du fait qu'il soit plein. Plusieurs formes de réalisation sont possibles.

Selon la forme de réalisation représentée sur la figure 2, le réservoir 10 comprend une ouverture 21 et un flotteur dans le réservoir. En remplissant le réservoir, le flotteur monte jusqu'à venir fermer l'ouverture 21. Un conduit non représenté pour des raisons de simplification connecte le haut du réservoir à l'un des tubes 12. Lorsque le réservoir est fermé par le flotteur, l'eau passe alors par le conduit et coule dans le tube 12 concerné. Lorsque la personne en charge de remplir le réservoir voit de l'eau couler par le tube, elle est avertie que le réservoir est plein.

Selon une autre forme de réalisation non représentée, un conduit connecte le réservoir par une face latérale de celui-ci de préférence celle au niveau de laquelle les tubes sont reliées et un des tubes 12. À l'entrée du conduit au niveau du réservoir se trouve un clapet fermant l'ouverture et soutenu par un ressort de soupape dont la force est supérieure à celle exercée par l'eau. Lorsque le réservoir est plein, le flotteur de la même façon que précédemment ferme le réservoir. La pression monte et dépasse le seuil maximal fixé par la soupape : le clapet ne peut plus être maintenu fermé. Le clapet s'ouvre et évacue l'eau dans le tube 12. La personne en charge du remplissage du réservoir en voyant l'eau couler par le tube 12 sait que le réservoir est rempli.

Le système 8 comprend un support 15 de transport et de fixation qui avec le réservoir 10 et le ou les tubes 12 forment un ensemble d'un seul tenant. La description qui suit présente deux formes de réalisation du support 15.

Selon une première forme de réalisation, le support 15 comprend un châssis 28 comportant des poutres permettant de transporter le réservoir et le ou les tubes et de les fixer dans l'aéronef et par exemple au plancher 9 de celui-ci. Le châssis 28, le réservoir 10 et le ou les tubes 12 forment un ensemble d'un seul tenant susceptible d'être chargé et déchargé de l'aéronef. Les poutres comportent des moyens de fixation de type connu à l'aéronef et par exemple au plancher 9 de l'aéronef. Les figures illustrent une forme possible de châssis mais toute autre forme permettant de former un tout d'un seul tenant avec le réservoir et le ou les tubes 12 pour transporter le système 8 d'un seul bloc dans l'aéronef ou de décharger de celui-ci ainsi que pour la fixation dans l'aéronef est possible. Dans la forme illustrée sur les figures 2 et 3, le châssis 28 comprend quatre poutres 30 longitudinales, quatre poutres 32 transversales et quatre poutres 34 verticales formant une armature 36 parallélépipédique de section rectangulaire. Le réservoir 10 est en contact avec l'ensemble des poutres mais ne déborde pas à l'extérieur de l'armature 36 formée. Les deux poutres 30 longitudinales inférieures se prolongent longitudinalement de part et d'autre de l'armature 36 par quatre poutres de prolongement 38 longitudinales inférieures. Les extrémités 40 supérieures de chaque poutre 34 verticale sont liées par une autre poutre 42 inclinée aux extrémités 44 des poutres 38 de prolongement longitudinales inférieures. Les poutres 42 inclinées forment des supports à l'armature 36 pour renforcer sa solidité. Par ailleurs, la masse du châssis est répartie sur une certaine longueur de plancher 9 afin d'éviter de le surcharger localement et de l'endommager. Le châssis permet également le maintien en position du réservoir sur le plancher 9 de l'aéronef. Il offre enfin des prises pour tout type d'engin permettant de transporter et introduire le système modulaire dans l'aéronef. Les poutres 42 se trouvant du côté des tubes 12 encadrent ceux-ci sur une partie de leur longueur et en particulier au niveau de la zone de connexion des tubes 12 avec le réservoir. Les poutres permettent également d'être adaptées pour recevoir des moyens de fixation du système 8 au plancher 9 de l'aéronef.

Selon une deuxième forme de réalisation non illustrée, le support 15 comprend une palette sur laquelle est disposée au moins le réservoir permettant de transporter le réservoir et le ou les tubes et de les fixer dans l'aéronef et par exemple au plancher 9 de celui-ci. La palette, le réservoir 10 et le ou les tubes 12 forment un ensemble d'un seul tenant susceptible d'être chargé et déchargé de l'aéronef. La palette comporte des moyens de fixation de type connu à l'aéronef et par exemple au plancher 9 de l'aéronef. Il suffit alors de porter la palette à l'intérieur de l'aéronef et de la faire glisser sur le plancher 9 pour positionner le système à l'emplacement souhaité, certains planchers étant équipés de roulettes.

Que ce soit dans la forme de réalisation avec palette ou avec châssis, le système 8 est d'un seul tenant formant un ensemble modulaire susceptible d'être intégré à un aéronef hôte. Le système 8 modulaire présenté permet ainsi d'être installé de manière temporaire dans un aéronef hôte et d'éviter d'avoir à le modifier pour recevoir ce système 8. Le système 8 peut être installé et désinstallé à volonté en fonction du programme de l'aéronef hôte concerné. Par ailleurs, le support présente une longueur déterminée permettant de répartir la charge du réservoir sur ladite longueur comme vu plus haut pour l'exemple illustré du châssis. Selon une forme possible de réalisation, la longueur du support 15 (châssis ou palette) est au moins égale à la longueur du réservoir 10.

Le système 8 modulaire est équipé d'un dispositif 14 de largage de fluide et dans l'exemple décrit de largage d'eau. Le dispositif 14 de largage d'eau présente une forme spécifique permettant de modifier la direction de l'écoulement. D'une direction longitudinale, le dispositif 14 permet au flux d'eau de s'écouler dans une direction différente. Dans la forme de réalisation illustrée, le dispositif 14 permet de larguer l'eau dans une direction appropriée et par exemple perpendiculaire à la direction longitudinale à savoir une direction verticale Z ou proche d'une direction verticale si l'aéronef en vol ne se trouve pas en position horizontale. Par ailleurs, le dispositif 14 présente également un autre avantage qui est de répartir le largage en plusieurs flux dont l'utilisation peut être indépendamment contrôlée pour chacun des flux, à savoir autorisée ou pas. Ainsi suivant l'intensité du feu, une partie seulement des flux pourrait être utilisée ce qui permet de sauvegarder une quantité d'eau pour un autre feu, une autre localisation de foyer ou à d'autres fins.

Le dispositif de largage d'eau comprend une cuve 46 close présentant au moins une ouverture 48 pour l'entrée d'eau et au moins une ouverture 50 pour le largage de l'eau vers l'extérieur de l'aéronef. L'ouverture 48 présente une forme permettant à la cuve de s'emmancher sur le ou les tubes 12 de manière à former une connexion étanche de manière connue. Dans le cas de plusieurs tubes parallèles et dans la forme illustrée de deux tubes 12, la cuve présente deux ouvertures 48A, 48B se prolongeant sous forme de manchons 52, 54 permettant la connexion avec les tubes 12. Dans le cas présent, les manchons 52, 54 présentent une forme cylindrique de section circulaire.

Dans la forme de réalisation illustrée, la cuve 46 comprend plusieurs ouvertures 50A, 50B ... 50n indépendantes. Les ouvertures 50A, 50B ... 50n sont aboutées l'une à l'autre. Les ouvertures 50A, 50B ... 50n sont contiguës de manière à circonscrire l'ensemble dans une même plus grande ouverture 51 de forme géométrique déterminée par la forme des ouvertures 50A, 50B, ... 50n. Dans la forme illustrée sur les figures, chaque ouverture 50A, 50B ... 50n est de forme rectangulaire. Les ouvertures 50A, 50B ... 50n contiguës sont circonscrites dans une même grande ouverture rectangulaire 51 scindée en plusieurs ouvertures 50A, 50B, ... 50n. Les ouvertures 50A, 50B, ... 50n sont comprises dans un plan parallèle au plan XY, à savoir un plan perpendiculaire à un plan transversal YZ aux tubes. Les ouvertures 50A, 50B, ... 50n sont orientées de manière à guider les flux s'écoulant au travers vers le sol, à savoir dans une direction verticale Z. En vol, l'aéronef peut voler dans une position cabrée. La porte 6 arrière en position ouverte peut se trouver dans le prolongement du plancher 9 de l'aéronef. Ainsi le dispositif de largage 14 disposée au-delà de la porte 6 mais dans son prolongement longitudinal ne se trouve pas dans une position horizontale en vol. Le plan dans lequel les ouvertures 50A, 50B ... 50n sont disposées est choisi suivant la direction de largage d'eau souhaitée. Le plan des ouvertures peut être fixe (forme de réalisation illustrée) ou réglable, individuellement ou pas ou avec le choix de pouvoir les régler individuellement ou pas. Par ailleurs, la cuve présente une forme permettant de former des conduits 53A, 53B, ... 53n d'écoulement d'eau dont l'orifice de sortie correspond à chaque ouverture 50A, 50B ... 50n. Les conduits sont ici de forme parallélépipédique de section rectangulaire formant ensemble un bloc parallélépipédique de section rectangulaire dont l'orifice de sortie correspond à l'ouverture 51 rectangulaire. Les contours externes des conduits pourraient être arrondis à des fins aérodynamiques. L'axe de chaque conduit 53A, 53B, ... 53n correspond à l'axe de l'ouverture 50A, 50B ... 50n correspondante.

Selon une forme de réalisation, les ouvertures 50A, 50B ... 50n sont susceptibles chacune d'être obturée par une vanne 55 prenant dans la forme de réalisation illustrée la forme d'un volet respectivement 56A, 56B,... 56n. Selon une forme de réalisation de l'invention, chaque conduit 53A, 53B, ... 53n est pourvu d'un volet 56A, 56B,... 56n. Ainsi, l'ouverture et la fermeture de chaque volet 56A, 56B,... 56n peuvent être contrôlées indépendamment pour chaque volet ou pas par un dispositif 58 de contrôle décrit plus loin. Les volets 56 permettent de régler le débit de fluide largué.

Dans la forme de réalisation illustrée, la cuve 46 présente une forme d'entonnoir à savoir dont les dimensions dans un plan parallèle au plan XY diminuent en allant verticalement vers le bas, la dimension la plus grande se trouvant à hauteur des tubes de manière à guider l'eau vers la ou les ouvertures 50. La partie la plus basse de la cuve dans la forme illustrée se trouve être aux dimensions de l'ouverture 51. Les volets 56 se présentent chacun sous la forme d'un panneau plan 60 articulé autour d'un axe parallèle à la direction Y ; l'axe d'articulation est pour chaque panneau central longitudinalement. En position ouverte, les panneaux 60 se trouvent chacun dans un plan parallèle au plan YZ et tous parallèles les uns aux autres. En position fermée, les panneaux sont dans un plan parallèle au plan XY, contiguës, aboutés les uns aux autres sans se superposer obturant chacune l'ouverture 50A, 50B, ... 50n correspondante et fermant l'ouverture rectangulaire 51 susmentionnée. Toute autre forme de réalisation est possible.

Dans la forme illustrée, la cuve 46 présente une dimension dans un plan parallèle au plan YZ diminuant longitudinalement en s'éloignant des ouvertures 48. Toute autre forme de cuve est possible du moment qu'elle présente des ouvertures 48 d'entrée et des ouvertures 50 de sortie permettant le changement de direction du flux pour larguer l'eau dans la direction du feu et en diminuer ainsi sa dispersion.

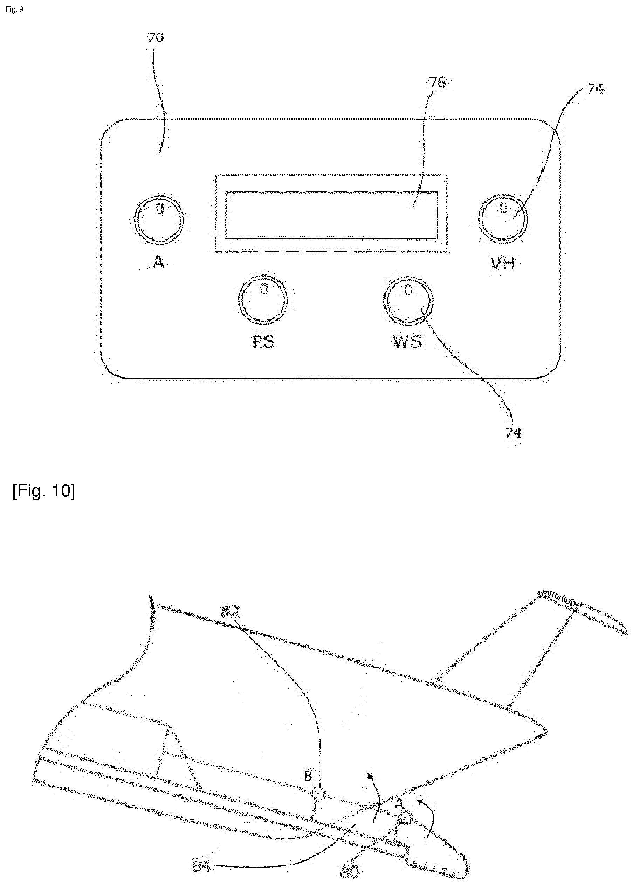

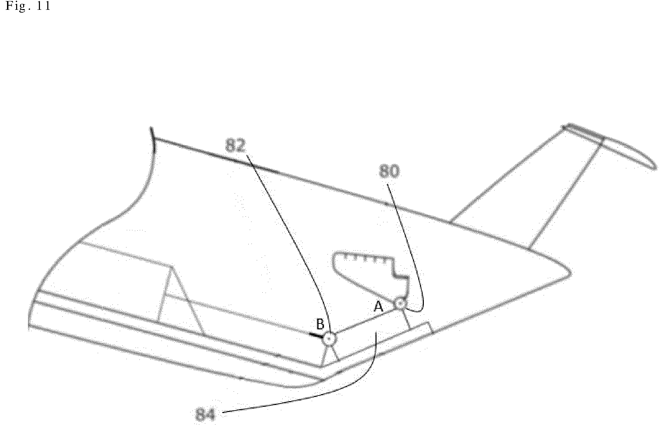

Selon une forme possible de réalisation, le dispositif de largage 14 est rétractable. En effet, pour permettre à la porte arrière 6 de se fermer, il est nécessaire que le dispositif 14 ne dépasse pas de l'extrémité 20 de la porte arrière. De nombreuses formes de réalisation sont possibles. Selon une première forme possible visible sur les figures 10 et 11, le dispositif de largage est lié au tube ou auxdits tubes 12 par l'intermédiaire d'une charnière 80 disposée au plus haut de chacun des tubes 12 et manchons 52, 54 permettant au dispositif de pivoter autour d'un axe A transversal parallèle à la direction Y. Un joint périphérique est prévu entre le ou les tubes 12 et le ou les manchons 52, 54 pour assurer l'étanchéité lorsque le ou les manchons sont en position de largage dans le prolongement du ou des tubes 12. Comme le montrent les figures 10 et 11, il est possible de prévoir une deuxième charnière 82 du même type que la charnière 80 positionnée plus en amont au niveau des tubes 12 et des tuyaux 22. La deuxième charnière permet à un segment 84 de tubes jouxtant le dispositif de largage de pivoter en rotation autour d'un axe B transversal parallèle à la direction Y entrainant également en rotation le dispositif de largage pour permettre à la porte arrière 6 de se fermer facilement. Ainsi depuis la position déployée sur la figure 10, on commence par faire pivoter le dispositif de largage autour de l'axe A puis un segment de tubes autour de l'axe B et le module est ainsi complètement rétracté à l'intérieur de l'aéronef et la porte arrière peut se fermer comme montré sur la figure 11 de manière schématique. Il est également possible de prévoir une combinaison simultanée de rotations au niveau de A et B selon une séquence de mouvements bien déterminée permettant au dispositif de largage de se rétracter et la porte de se fermer. Une charnière est également prévue au niveau des tuyaux 22 pour suivre le mouvement de rotation avec le segment 84 de tubes. Selon une autre forme de réalisation possible, au moins une partie du ou des tubes sont réalisés de manière télescopique pour pouvoir réduire de longueur et permettre au dispositif 14 de largage de ne plus dépasser de l'extrémité 20.

Selon une autre forme de réalisation qui ne fait pas partie du système revendiqué, le dispositif de largage 14 n'est pas rétractable. En effet, il est possible à certains aéronefs hôtes de voler avec la porte arrière 6 ouverte.

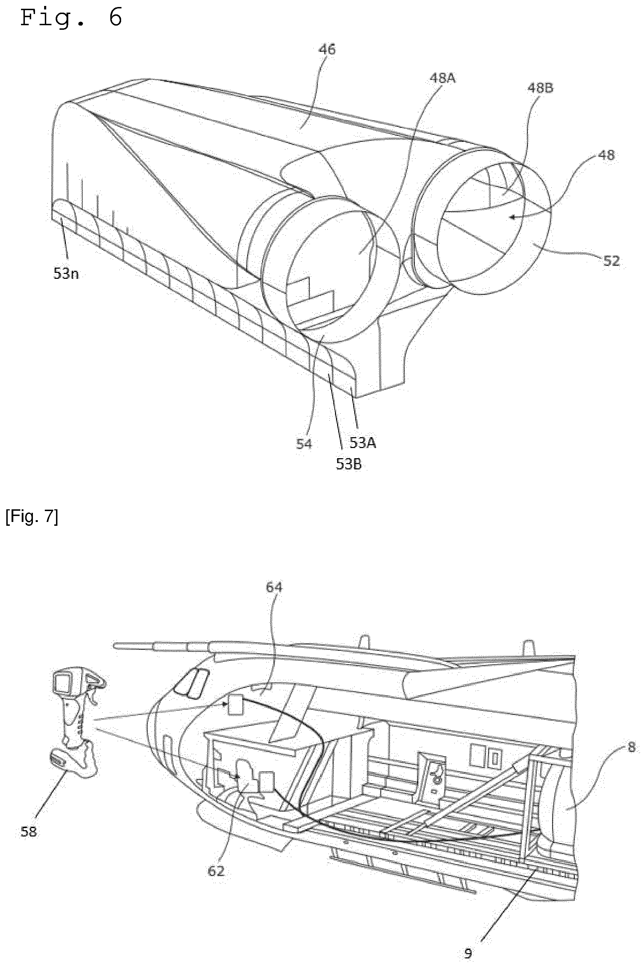

Comme indiqué plus haut, le système 8 est contrôlé à l'aide d'un dispositif de contrôle 58 susceptible d'être manipulé directement par un pilote et/ou un copilote et/ou un troisième homme dans le cockpit et/ou tout autre opérateur dont la fonction est de déclencher le largage d'eau et/ou de préparer la quantité adaptée. Le contrôle pourrait également être envisagé depuis le sol, le dispositif de contrôle étant alors connecté à l'aéronef par tout type de moyen de communication sans fil connu. Le dispositif 58, représenté par un rectangle dans l'aéronef dans l'exemple illustré sur la figure 7, est connecté au système 8 pour en assurer le contrôle. Suivant la forme de réalisation décrite ci-dessus, le dispositif 58 est connecté aux vannes 13 de fermeture des tubes 12 du côté du réservoir et/ou aux vannes 55 à savoir ici aux volets 56 de fermeture. Le dispositif peut être utilisé par un troisième homme 62 (dont seul le siège sur lequel il est destiné à s'asseoir est représenté) ou depuis le cockpit 64 suivant le choix effectué par le pilote et/ou le troisième homme. La description qui suit présente une forme possible de réalisation du dispositif de contrôle mais toute autre forme est possible.

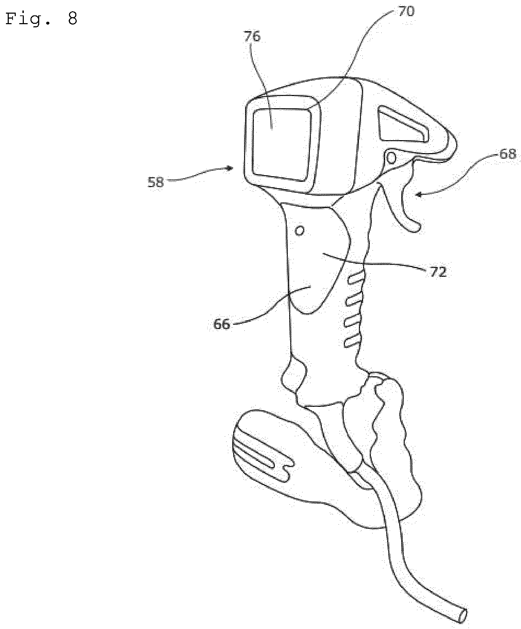

Comme montré sur la figure 8, le dispositif de contrôle 58 se présente sous la forme d'un pistolet 66 présentant une gâchette 68 de déclenchement, un panneau 70 de contrôle et un manche 72 de préhension. Le panneau 70 de contrôle présente des moyens de paramétrer plusieurs critères ayant une influence sur la quantité d'eau à larguer nécessaire. Ainsi il est possible de contrôler la quantité d'eau à l'aide des vannes 13 et/ou 55 présentés précédemment et ce selon différents critères. Le pistolet 66 comprend un processeur interne dans lequel est programmé un algorithme permettant de déterminer la quantité d'eau et plus précisément le flux nécessaire et la durée suivant les critères saisis. Dans la forme illustrée représentée sur la figure 9, le panneau 70 de contrôle comprend des boutons 74 à molettes pour régler de manière incrémentale chaque critère. Chaque bouton 74 permet de régler un critère. Dans l'exemple illustré, il est possible de saisir quatre critères : - l'altitude (A) de largage de l'aéronef ; - la vitesse (PS) de l'aéronef ; - la vitesse (WS) du vent ; - le sol concerné (VH) et par exemple la hauteur et/ou le type de la végétation et/ou le type du sol. Selon que soient concernés par exemple des résineux ou des feuillus la quantité d'eau nécessaire n'est pas forcément la même. Les sols de tourbe ou de bitume ne doivent pas être considérés de la même façon. D'autres critères sont susceptibles d'être ajoutés par l'intermédiaire d'un tel panneau de contrôle et/ou de manière différente. Par exemple le débit de largage peut varier suivant le sol au-dessus duquel l'aéronef vole. Dans ce cas, ce n'est plus à l'aide d'un bouton que le sol concerné est saisi mais d'une carte enregistrée du sol survolé. Ainsi par exemple le débit peut être important si la hauteur de végétation est importante puis diminuer voire s'interrompre en présence d'une clairière. Il est possible de programmer seulement certains critères ou l'ensemble de ceux-ci. Le panneau 70 de contrôle présente un écran 76 d'affichage pour afficher des informations. Ainsi par exemple, lorsque le bouton d'altitude est manipulé, l'altitude sélectionnée est affichée sur l'écran 76. D'autres types d'affichage peuvent être utilisés tels que par exemple de simples diodes électroluminescentes (LEDs) ou lignes de diodes électroluminescentes. Une fois l'ensemble des critères déterminés et saisis, l'algorithme calcule la quantité d'eau nécessaire et les vannes 13 et/ou 55 correspondantes à ouvrir pendant une durée donnée. Lorsque l'aéronef arrive sur les lieux, il ne reste plus qu'à la personne désignée pour actionner le largage d'eau qu'à actionner la gâchette 68 ; les vannes 13, 55 commandées par la gâchette à savoir les vannes 13 de fermeture des tubes 12 du côté du réservoir 10 et/ou les vannes 55 (volets 56) requises s'ouvrent et la quantité d'eau calculée sera projetée sur le feu à éteindre pendant la durée déterminée.

## Revendications

1. Système de stockage et de largage de fluide comprenant un réservoir (10) de fluide, au moins un tube (12) et à l'extrémité du ou des tubes (12) un dispositif de largage comprenant une cuve (46) close présentant au moins une ouverture (48) d'entrée destinée à être raccordée de manière étanche respectivement audit ou auxdits tubes (12) pour l'entrée de fluide et plusieurs ouvertures (50A, 50B, ..., 50n) de sortie indépendantes et contiguës et circonscrites dans une unique ouverture d'une forme géométrique donnée orientées de manière à permettre de larguer le fluide dans une direction déterminée différente de la direction longitudinale d'écoulement du fluide dans le ou les tubes (12), une première charnière (80) étant prévue pour permettre au dispositif de largage de pivoter en rotation autour d'un axe A transversal, **caractérisé en ce qu'**il comprend une seconde charnière (82) prévue au niveau des tubes (12) pour permettre à un segment de tubes (84) jouxtant le dispositif de largage de pivoter en rotation autour d'un axe B transversal.

2. Système selon la revendication 1, **caractérisé en ce que** la direction de largage du fluide dans la ou les ouvertures (50) est verticale et perpendiculaire à la direction d'écoulement longitudinale du fluide dans le ou les tubes (12).

3. Système selon l'une des revendications 1 à 2, **caractérisé en ce que** la cuve (46) comprend plusieurs ouvertures (50A, 50B, ... 50n) indépendantes et contiguës circonscrites dans un même rectangle (51).

4. Système selon l'une des revendications 1 à 3, **caractérisé en ce que** chaque ouverture (50) de sortie est obturée par au moins une vanne (55), l'ouverture et la fermeture des vannes (55) étant contrôlées indépendamment par un dispositif de contrôle (58).

5. Système selon l'une des revendications 1 à 4, **caractérisé en ce que** la cuve (46) présente une forme d'entonnoir à savoir dont la section dans un plan parallèle au plan XY horizontal se rétrécit verticalement vers le bas.

6. Aéronef hôte comprenant une porte (6) arrière susceptible de se déplacer entre une position fermée et une position ouverte permettant la communication entre l'extérieur et une zone (4) intérieure dans laquelle est introduit un système selon la revendication 5, là où les ouvertures (50) de sortie du dispositif de largage de fluide dépassant complètement de la porte (6) arrière de l'aéronef en position de largage.

## Patentansprüche

1. System zum Speichern und Abwerfen von Fluid, umfassend einen Fluidtank (10), mindestens ein Rohr (12) und an dem Ende des oder der Rohre (12) eine Abwurfvorrichtung, umfassend eine geschlossene Wanne (46), die mindestens eine Eintrittsöffnung (48) aufweist, die dazu bestimmt ist, zum Eintreten von Fluid dicht an das bzw. die Rohre (12) angeschlossen zu werden, und mehrere unabhängige und aneinandergrenzende und in eine einzige Öffnung mit einer gegebenen geometrischen Form einbeschriebene Austrittsöffnungen (50A, 50B, ..., 50n), die so ausgerichtet sind, dass das Abwerfen des Fluids in eine bestimmte Richtung ermöglicht wird, die verschieden von der Fließlängsrichtung des Fluids in dem oder den Rohren (12) ist, wobei ein erstes Scharnier (80) vorgesehen ist, um der Abwurfvorrichtung zu ermöglichen, um eine Querachse A drehend zu schwenken, **dadurch gekennzeichnet, dass** es ein zweites Scharnier (82) umfasst, das an den Rohren (12) vorgesehen ist, um einem an die Abwurfvorrichtung angrenzenden Rohrsegment (84) zu ermöglichen, um eine Querachse B drehend zu schwenken.

2. System nach Anspruch 1, **dadurch gekennzeichnet, dass** die Abwurfrichtung des Fluids in der oder den Öffnungen (50) vertikal und senkrecht zu der Längsfließrichtung des Fluids in dem oder den Rohren (12) ist.

3. System nach einem der Ansprüche 1 bis 2, **dadurch gekennzeichnet, dass** die Wanne (46) mehrere unabhängige und aneinandergrenzende, in ein selbes Rechteck (51) einbeschriebene Öffnungen (50A, 50B, ... 50n) umfasst.

4. System nach einem der Ansprüche 1 bis 3, **dadurch gekennzeichnet, dass** jede Austrittsöffnung (50) durch mindestens einen Schieber (55) verschlossen wird, wobei das Öffnen und das Schließen der Schieber (55) unabhängig durch eine Steuervorrichtung (58) gesteuert wird.

5. System nach einem der Ansprüche 1 bis 4, **dadurch gekennzeichnet, dass** die Wanne (46) eine Trichterform aufweist, d. h. ihr Querschnitt sich in einer zu der horizontalen Ebene XY parallelen Ebene vertikal nach unten hin verjüngt.

6. Host-Flugzeug, umfassend eine Heckklappe (6), die geeignet ist, sich zu verlagern zwischen einer geschlossenen Stellung und einer geöffneten Stellung, welche die Verbindung zwischen der Außenumgebung und einem Innenbereich (4) ermöglicht, in den ein System nach Anspruch 5 eingeführt ist, wobei die Austrittsöffnung oder -öffnungen (50) der Vorrichtung zum Abwerfen von Fluid die Heckklappe (6) des Flugzeugs in der Abwurfstellung vollständig überragt bzw. überragen.

## Claims

1. Fluid storing and jettisoning system comprising a fluid reservoir (10), at least one tube (12) and, at the end of the one or more tubes (12), a jettisoning device comprising a closed tank (46) having at least one inlet opening (48) intended to be respectively connected in leaktight fashion to said one or more tubes (12) for letting in fluid and a plurality of independent and contiguous outlet openings (50A, 50B, ..., 50n) that are circumscribed in a single opening with a given geometric shape and are oriented so as to make it possible to jettison the fluid in a determined direction that is different from the longitudinal direction of flow of the fluid in the one or more tubes (12), a first hinge (80) being provided to allow the jettisoning device to pivot in rotation about a transverse axis A, **characterized in that** it comprises a second hinge (82) provided at the tubes (12) to allow a segment of tubes (84) adjacent to the jettisoning device to pivot in rotation about a transverse axis B.

2. System according to Claim 1, **characterized in that** the direction in which the fluid is jettisoned in the one or more openings (50) is vertical and perpendicular to the longitudinal direction of flow of the fluid in the one or more tubes (12).

3. System according to either of Claims 1 and 2, **characterized in that** the tank (46) comprises a plurality of independent and contiguous openings (50A, 50B, ... 50n) that are circumscribed in one and the same rectangle (51).

4. System according to one of Claims 1 to 3, **characterized in that** each outlet opening (50) is shut off by at least one valve (55), the opening and the closing of the valves (55) being controlled independently by a control device (58).

5. System according to one of Claims 1 to 4, **characterized in that** the tank (46) takes the form of a funnel, specifically having a cross section in a plane parallel to the horizontal plane XY that narrows vertically downwards.

6. Host aircraft comprising a rear door (6) that can be moved between a closed position and an open position allowing communication between the outside and an internal area (4) into which a system according to Claim 5 is introduced, the one or more outlet openings (50) of the fluid jettisoning device projecting completely beyond the rear door (6) of the aircraft in the jettisoning position.
